# EUROPEAN PATENT APPLICATION

(11) **EP 3 290 620 A1**
(43) Date of publication of application: **07.03.2018**
(21) Application number: 17001419.5
(22) Date of filing: 22.08.2017
(51) Int. Cl.: E04H 9/14, E04H 12/22

(54) **STORM PROTECTION DEVICE**

(30) Priority: 01.09.2016 DK 201600511
(71) Applicant: A LED FYN Holding ApS, 5330 Munkebo (DK)
(72) Inventor: Christensen, Christian S., Munkbo 5330 (DK)

(57) **Abstract**

A storm protection device (2) for securing an element (30) arranged above ground level to the ground (26) is disclosed. The storm protection device (2) comprises a housing (4) configured to be arranged below ground level. The housing (4) furthermore comprises a fixing element (6) attached to the housing (4) and configured to be arranged in a manner in which the fixing element (6) protrudes from the top portion of the housing (4).

## Description

### Field of invention

The present invention relates to a storm protection device for securing an element arranged above ground level to the ground.

### Prior art

It is known to apply storm protection devices for securing elements arranged above ground level to the ground. The prior art storm protection devices typically comprise a ground-mounted rod that extends beyond ground level. The ground-mounded rod is typically provided with screw members for easing the mounting process. It is, however, a major disadvantage that a portion of the prior art storm protection devices extends beyond ground level as lawn mowing cannot be performed in the areas close to the storm protection device. In addition, children playing on the lawn may get hurt when bumping into the portion of the prior art storm protection device that extends beyond ground level.

From US 2007/0000183 A1, a storm protection device is known. The device comprises a socket, and an eye-plate inserted into a cup, whereby the eye-plate comprises a lug providing an attachment point. Once the eye-plate is inserted into the cup, the eye-plate is attached with a retaining ring positioned within a recessed lip formed on the flange, and the retaining ring is secured using screws. Thus, the retaining ring fixes the eye-plate within the cup. A cap may further cover the cup when the device is not in use. The device has several parts which must be assembled and fastened, rendering the mounting time-consuming and difficult to use.
Thus, there is a need for a storm protection device which reduces or even eliminates the above-mentioned disadvantages of the prior art.

It is an object of the present invention to provide a storm protection device that enables lawn mowing to be performed in the area close to the storm protection device and that enables children to play without bumping into the storm protection device.

### Summary of the invention

The object of the present invention can be achieved by a storm protection device according to claim 1. Preferred embodiments are defined in the dependent sub claims, explained in the following description and illustrated in the accompanying drawings.

The storm protection device according to the invention is a storm protection device for securing an element arranged above ground level to the ground, wherein the storm protection device comprises a housing configured to be arranged below ground level, wherein the housing comprises a fixing element attached to the housing and configured to be arranged in a manner in which the fixing element protrudes from the top portion of the housing.

Hereby, it is possible to provide a storm protection device enabling lawn mowing to be performed in the area close to the storm protection device and enabling children to play without bumping into the storm protection device.

The storm protection device according to the invention is a storm protection device for securing an element arranged above ground level to the ground. Such element may be a rod member extending parallel to the ground. The element may be a foot member of a trampoline or another construction to be arranged on the ground.

The storm protection device comprises a housing configured to be arranged below ground level. The housing may be made in any material suitable for being arranged under ground level. Such material may be a metal (e.g. steel or aluminium) or a plastic material (e.g. a fibre reinforced plastic material). The housing may have any suitable geometric shape.

The housing preferably comprises an open top portion and one or more closed side walls. The housing preferably comprises a flat bottom portion that may be provided with one or more openings. Alternatively, the housing may comprise a bottom portion having another geometry, e.g. a conical geometry or a threaded mounting structure.

It may be an advantage that the housing is cylindrical and comprises a bottom portion having one or more basically plane, horizontally extending plate members.

The housing comprises a fixing element attached to the housing. The fixing element may be attached directly to a structure inside the housing or to an element attached to a structure inside the housing.

The fixing element is configured to be arranged in a manner in which the fixing element protrudes from the top portion of the housing. Hereby, the fixing element can be attached to an element arranged on the ground level in order to fix the element to the ground.

It may be an advantage that the fixing element is attached to an attachment structure attached to the inside of the housing.

Hereby, the attachment structure may function as a safety element. The attachment structure may have any suitable geometry and size. The attachment structure may be attached to the housing, e.g. to the bottom portion of the housing, by any suitable means including welding or mechanical attachment elements such as bolts and nuts.

It may be beneficial that the fixing element is detachably attached to the attachment structure.

Hereby, it is possible to replace the fixing element or detach the fixing element from the attachment structure if required.

It may be advantageous that the attachment structure is attached to the bottom portion of the housing.

It may be an advantage that the storm protection device comprises a lid member configured to at least partly cover the top portion of the housing.

Hereby, it is possible to close an opening in the top portion of the housing in order to prevent water from entering the housing.

It may be beneficial that the lid member is provided with at least one opening.

Hereby, the fixing element may extend through the opening(s) in the lid member. Accordingly, an element arranged on ground level may be fixed to the storm protection device by means of the fixing element extending through the opening(s).

It may be an advantage that the lid member is detachably attached to the top portion of the housing.

Hereby, it is possible to attach and detach the lid member to/from the top portion of the housing.

It may be advantageous that the lid member comprises a handle.

Hereby, the handle can be used to hold (and get a grip on) the lid member. Accordingly, attachment and detachment of the lid member is eased.

It may be beneficial that the housing is provided with a bottom portion comprising one or more drain holes.

Hereby, water entering the housing can be drained away.

It may be an advantage that a shaft is attached to the housing, preferably to the bottom portion of the housing.

Hereby, it is possible to use the shaft to secure the housing to the ground.

The shaft is preferably formed as a straight rod. The shaft may be massive or hollow.

It may be advantageous that a protruding member is attached to the shaft.

Hereby, the protruding member can be used to ease the installation of the storm protection device (enabling the storm protection device to be screwed into the ground). Furthermore, the protruding member can prevent the storm protection device from being pulled up from the ground.

The protruding member may have any suitable geometry and size. The protruding member may be formed as a screw or as a helix screw by way of example.

It may be an advantage that at least one protruding member is attached to the housing, preferably to the bottom portion of the housing.

Hereby, the housing can be secured to the ground by means of the at least one protruding member. The at least one protruding member may be rotatably attached to the housing e.g. by being screwed into a threaded portion provided in the housing.

It may be beneficial that the housing comprises one or more holding elements, preferably attached to one or more side wall(s) of the housing.

Hereby, the one or more holding elements can be used during installation of the storm protection device. The one or more holding elements can be used to hold onto in order to turn the housing when screwing the storm protection device into a fixed position in the ground.

It may be beneficial that a hole (corresponding to the outer geometry of the housing) is provided in the ground before the storm protection device is installed.

It may be an advantage that the storm protection device comprises one or more insert structures configured to plug the opening(s) in the lid member.

Hereby, water is prevented from entering the housing through the opening(s) in the lid member.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic, cross-sectional, side view of a storm protection device according to the invention;
- Fig. 2: shows a schematic, perspective view of a storm protection device according to the invention;
- Fig. 3: shows a schematic, cross-sectional view of a storm protection device according to the invention;
- Fig. 4: shows a schematic view of a storm protection device according to the invention;
- Fig. 5A: shows a schematic, top view of a cylindrical housing of a storm protection device according to the invention;
- Fig. 5B: shows a schematic, top view of another housing of a storm protection device according to the invention;
- Fig. 5C: shows a schematic, top view of a further housing of a storm protection device according to the invention;
- Fig. 5D: shows a schematic, perspective, top view of a cylindrical housing of a storm protection device corresponding to the one shown in Fig. 5A;
- Fig. 5E: shows a schematic, perspective, top view of a conical housing of a storm protection device according to the invention;
- Fig. 5F: shows a schematic, side top view of the distal portion of a shaft of a storm protection device according to the invention;
- Fig. 5G: shows a schematic, side top view of the distal portion of another shaft of a storm protection device according to the invention and
- Fig. 5H: shows a schematic, side top view of the distal portion of an even further shaft of a storm protection device according to the invention.

### Detailed description of the invention

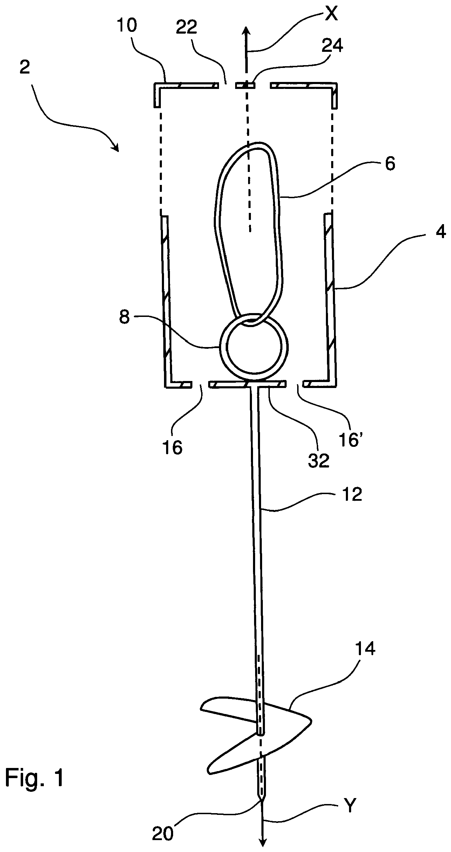

Referring now in detail to the drawings for the purpose of illustrating preferred embodiments of the present invention, a storm protection device 2 of the present invention is illustrated in Fig. 1.

Fig. 1 is a schematic, cross-sectional, side view of a storm protection device 2 according to the invention. The storm protection device 2 comprises a housing 4 configured to be arranged under ground level. A shaft 12 is attached to the bottom portion 32 of the housing 4. A lid member 10 provided with a handle 24 and a ring-shaped opening 22 is arranged above the top portion of the housing 4. The lid member 10 is configured to be attached to the top portion of the housing 4 and hereby close the opening in the top portion of the housing 4.

The housing 4 is basically cylindrical, and its longitudinal axis X is indicated. The shaft 12 attached to the bottom portion 32 of the housing 4 extends therefrom and is formed as an elongated rod. A protruding member 14 formed as a helix screw is attached near the pointed distal end 20 of the shaft 12. The longitudinal axis Y of the shaft 12 is indicated in Fig. 1. It can be seen that the longitudinal axis Y of the shaft 12 extends parallel to the longitudinal axis X of the housing 4. The protruding member 14 protrudes from the shaft 12 and is configured to prevent the storm protection device 2 from being pulled up from the ground once installed under ground level. The protruding member 14 is configured to be used to mount the storm protection device 2.

Drain holes 16, 16' are provided in the bottom portion 32 of the housing 4. These drain holes 16, 16' are configured to drain away rain water entering the housing 4 e.g. through the opening 22 in the lid member 10.

An attachment structure 8 is attached to the bottom portion 32 of the housing 4. The attachment structure 8 is shaped as a circular ring; however, it may be shaped differently. The attachment structure 8 may be triangular, square, rectangular, pentagonal, hexagonal or octagonal by way of example.

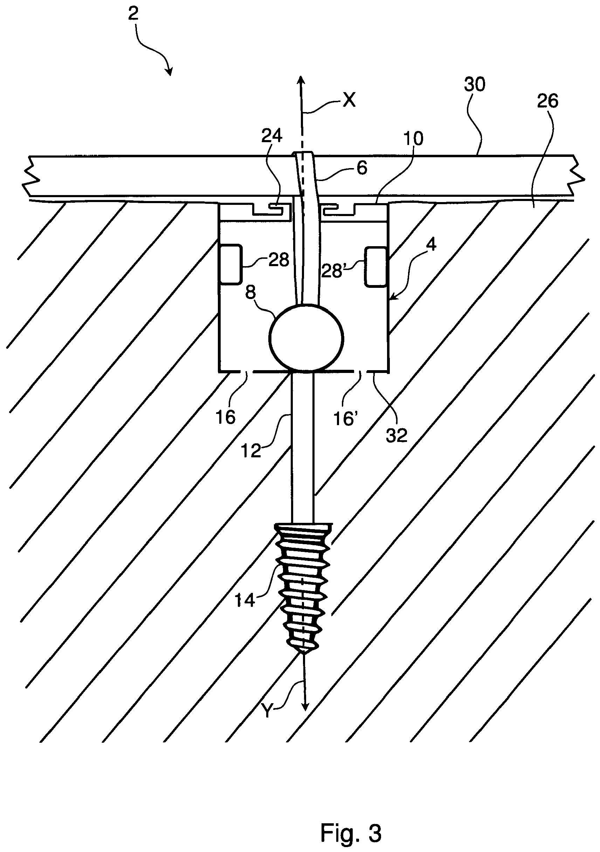

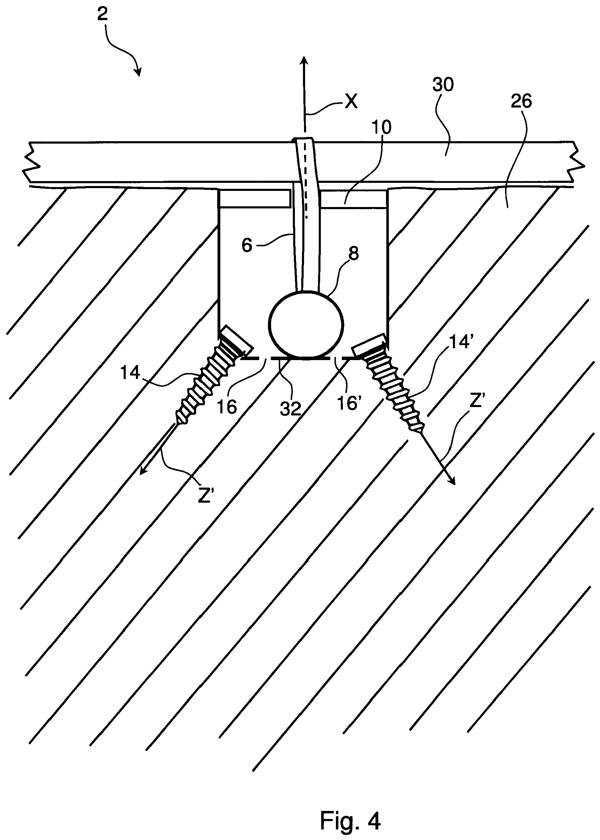

A fixing element 6 is attached to the attachment structure 8. The fixing element 6 is configured to be put through the opening 22 in the lid member 10 and hereby protrude therefrom. Accordingly, the fixing element 6 may be used to anchor an element arranged above ground level (e.g. the feed of a trampoline or other rod members (see Fig. 3 and Fig. 4).

The fixing element 6 may be a metal wire, a belt, a strap, a chain or a rope. The fixing element 6 may be flexible or elastic. The housing 4 may be produced in any suitable material including plastic (e.g. fibre reinforced plastic) or metal (e.g. steel such as stainless steel).

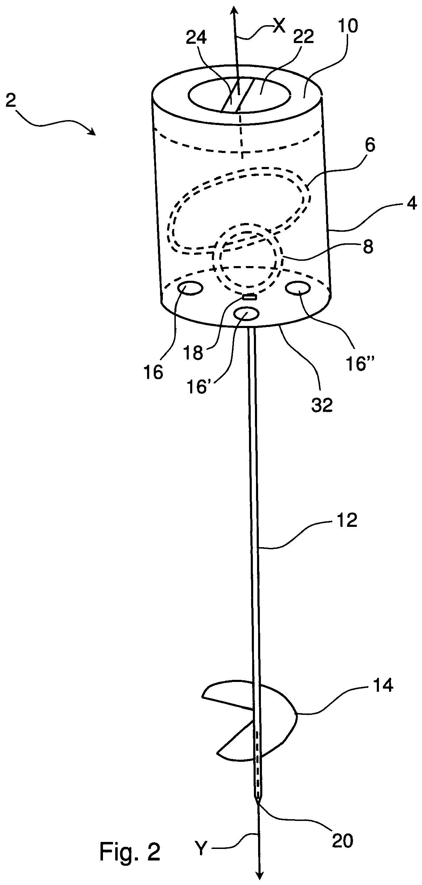

Fig. 2 illustrates a schematic, perspective view of a storm protection device 2 according to the invention. The storm protection device 2 comprises a housing 4 adapted to be arranged under ground level. A shaft 12 protrudes from the bottom portion 32 of the housing 4 and is attached thereto. A lid member 10 comprising a handle 24 and openings 22 is attached to the top portion of the housing 4. The lid member 10 hereby closes the opening in the top portion of the housing 4.

The housing 4 has a basically cylindrical geometry having a longitudinal axis X. The shaft 12 attached to the bottom portion 32 of the housing 4 and extending therefrom is formed as a straight, elongated rod. A protruding member 14 formed as a helix screw is attached to the shaft 12 near its distal pointed end 20. The longitudinal axis X of the housing 4 as well as the longitudinal axis Y of the shaft 12 are indicated in Fig. 2. It can be seen that the axes X, Y extend parallel to each other. The protruding member 14 is configured to prevent the storm protection device 2 from being pulled up from the ground when the storm protection device 2 is installed under ground level. The protruding member 14 is arranged and shaped to be used when mounting the storm protection device 2.
The bottom portion 32 of the housing 4 is provided with drain holes 16, 16', 16" arranged and formed to drain away rain water entering the housing 4 e.g. through the openings 22 in the lid member 10.

An attachment structure 8 shaped as a steel ring is attached to the bottom portion 32 of the housing 4 by means of a fixing structure 18. The fixing structure 18 may be welding or mechanical attachment means such as a bolt or pop rivets. The attachment structure 8 may have other geometries than the one shown in Fig. 2. The attachment structure 8 may be triangular, square, rectangular, pentagonal, hexagonal or octagonal by way of example. The attachment structure 8, the fixing structure 18, the housing 4 and the shaft 12 may be provided as a one-piece body. Alternatively, the fixing structure 18, the housing 4 and the shaft 12 may be provided as a one-piece body.

A fixing element 6 formed as a steel wire is attached to the attachment structure 8. The fixing element 6 is configured to be put through the opening 22 in the lid member 10 in order to be accessibly arranged protruding from the lid member 10. Hence, the fixing element 6 is suitable for being used for anchoring an element arranged above ground level (see Fig. 3 and Fig. 4).

The steel wire fixing element 6 may be replaced by a belt, a strap, a chain, a rope or another suitable fixing element 6.

Fig. 3 illustrates a schematic, cross-sectional view of a storm protection device 2 according to the invention. The storm protection device 2 is arranged under ground level and comprises a housing 4 adapted to be arranged under ground level. The storm protection device 2 comprises a shaft 12 attached to and protruding from the bottom portion 32 of the housing 4. A lid member 10 provided with an opening is attached to the top portion of the housing 4. Accordingly, the lid member 10 closes the opening in the top portion of the housing 4.

The housing 4 has a longitudinal axis X which extends vertically. The shaft 12 attached to the bottom portion 32 of the housing 4 and extending therefrom is formed as a straight, elongated rod having a longitudinal axis Y extending parallel to the longitudinal axis X of the housing 4. A protruding member 14 formed as a screw is attached to the distal end of the shaft 12

The protruding member 14 is configured to prevent the storm protection device 2 from being pulled up from the ground 26 when the storm protection device 2 is installed under ground level. The protruding member 14 is arranged and shaped to be used when mounting the storm protection device 2.

The bottom portion 32 of the housing 4 is provided with drain holes 16, 16' arranged and formed to drain away rain water entering the housing 4. An attachment structure 8 shaped as a steel ring is attached to the bottom portion 32 of the housing 4. A fixing element 6 formed as a belt is attached to the attachment structure 8. The fixing element 6 is configured to be put through the centrally arranged opening in the lid member 10 and to protrude from the lid member 10. It is, however, important to underline that the fixing element 6 may be configured to be put through an opening arranged differently in the lid member 10. The fixing element 6 is attached to a rod member 30 arranged above ground level. Accordingly, the fixing element 6 is used to anchor the rod member 30. Thus, the storm protection device 2 can be used to secure the rod member 30 to the ground 26. The fixing element 6 may alternatively be formed as a wire configured to be attached to the attachment structure 8.

The lid 10 is provided with a handle 24 for attaching the lid 10 to the top portion of the housing 4 and for removing the lid member 10 from the housing 4.

Holding elements 28, 28' are attached to the inside portion of the housing 4. These holding elements 28, 28' are configured to be used to turn the housing 4 in order to screw the protruding member 14 into the ground 26.

Fig. 4 illustrates a schematic view of a storm protection device 2 according to the invention. The storm protection device 2 is arranged under ground level and comprises a housing 4. The storm protection device 2 comprises a first protruding member 14 formed as a screw and a second protruding member 14' formed as a screw. The first protruding member 14 has a longitudinal axis Z angled relative to the longitudinal axis X of the housing 4. Similarly, the second protruding member 14' has a longitudinal axis Z' angled relative to the longitudinal axis X of the housing 4. The protruding members 14, 14' protrude from the corner areas of the bottom portion 32 of the housing 4. The protruding members 14, 14' are configured to prevent the storm protection device 2 from being pulled up from the ground 26 when the storm protection device 2 is installed under ground level like shown in Fig. 4.

A lid member 10 provided with an opening is detachably attached to the top portion of the housing 4. The bottom portion 32 of the housing 4 is provided with drain holes 16, 16' arranged and formed to drain away rain water entering the housing 4. An attachment structure 8 shaped as a ring is fixed to the bottom portion 32 of the housing 4. A fixing element 6 formed as a belt is attached to the attachment structure 8. It is important to underline that the fixing element 6 may alternatively be formed as a wire. The fixing element 6 extends through the centrally arranged opening in the lid member 10 and protrudes from the lid member 10. It is to be noted that the opening in the lid member does not need to be centrally arranged. The fixing element 6 is attached to a rod member 30 arranged above ground level. Therefore, the fixing element 6 is used to anchor rod member 30. Accordingly, the storm protection device 2 can be used to secure the rod member 30 to the ground 26.

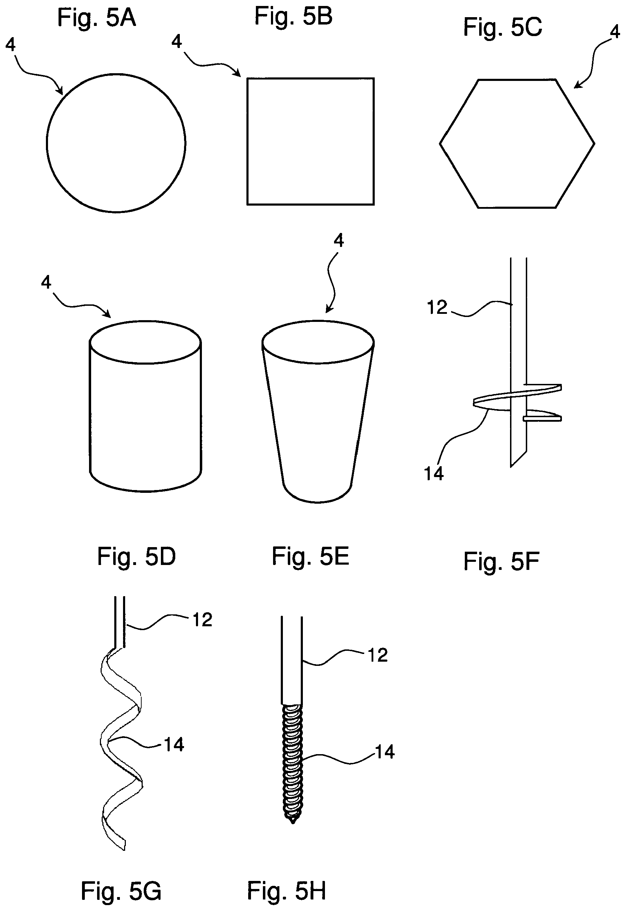

Fig. 5A illustrates a schematic, top view of a cylindrical housing 4 of a storm protection device according to the invention. The housing 4 has a circular cross section.

Fig. 5B illustrates a schematic, top view of another housing 4 of a storm protection device according to the invention. The housing 4 has a square cross section.

Fig. 5C illustrates a schematic, top view of a further housing 4 of a storm protection device according to the invention. The housing 4 has a hexagonal cross section.

Fig. 5D illustrates a schematic, perspective, top view of a cylindrical housing 4 of a storm protection device corresponding to the one shown in Fig. 5A.

Fig. 5E illustrates a schematic, perspective, top view of a conical housing 4 of a storm protection device according to the invention. The housing 4 has its largest diameter in the top portion, whereas the diameter of the bottom portion of the housing 4 is smaller.

Fig. 5F illustrates a schematic, side top view of the distal portion of a shaft 12 of a storm protection device according to the invention. A helix screw 14 is attached to the shaft 12 near its pointed distal end. The helix screw 14 is configured to be used to screw the shaft 12 into the ground and to prevent the shaft 12 from being pulled up from the ground.

Fig. 5G illustrates a schematic, side top view of the distal portion of another shaft 12 of a storm protection device according to the invention. A helix screw 14 is attached to the distal end of the shaft 12. The helix screw 14 is suitable for screwing the shaft 12 into the ground. The helix screw 14 further prevents the shaft 12 from being pulled up from the ground.

Fig. 5H illustrates a schematic, side top view of the distal portion of an even further shaft 12 of a storm protection device according to the invention. A screw 14 is attached to the distal end of the shaft 12. The screw 14 is adapted to be used to screw the shaft 12 into the ground. The screw 14 is configured to prevent the shaft 12 from being pulled up from the ground once installed in the ground.

### List of reference numerals

- 2: Storm protection device
- 4: Housing
- 6: Fixing element
- 8: Attachment structure
- 10: Lid member
- 12: Shaft
- 14, 14': Protruding member
- 16, 16', 16": Drain hole
- 18: Fixing structure
- 20: Pointed end
- 22: Opening
- 24: Handle
- 26: Ground
- 28, 28': Holding element
- 30: Rod member
- 32: Bottom portion
- X, Y, Z, Z': Longitudinal axis

## Claims

1. A storm protection device (2) for securing an element (30) arranged above ground level to the ground (26), wherein the storm protection device (2) comprises a housing (4) configured to be arranged below ground level, **characterised in that** the housing (4) comprises a fixing element (6) attached to the housing (4) and configured to be arranged in a manner in which the fixing element (6) protrudes from the top portion of the housing (4).

2. A storm protection device (2) according to claim 1, **characterised in that** the fixing element (6) is attached to an attachment structure (8) attached to the inside of the housing (4).

3. A storm protection device (2) according to claim 1 or claim 2, **characterised in that** the storm protection device (2) comprises a lid member (10) configured to at least partly cover the top portion of the housing (4).

4. A storm protection device (2) according to claim 3, **characterised in that** the lid member (10) is provided with at least one opening (22).

5. A storm protection device (2) according to claim 3 og 4, **characterised in that** the lid member (10) comprises a handle (24).

6. A storm protection device (2) according to one of the preceding claims 3-5, **characterised in that** the housing (4) is provided with a bottom portion (32) comprising one or more drain holes (16, 16', 16").

7. A storm protection device (2) according to one of the preceding claims, **characterised in that** a shaft (12) is attached to the housing (4), preferably to the bottom portion (32) of the housing (4).

8. A storm protection device (2) according to claim 7, **characterised in that** a protruding member (14, 14') is attached to the shaft (12).

9. A storm protection device (2) according to one of the preceding claims 1-6, **characterised in that** at least one protruding member (14, 14') is attached to the housing (4), preferably to the bottom portion (32) of the housing (4).

10. A storm protection device (2) according to one of the preceding claims, **characterised in that** the housing (4) comprises one or more holding elements (28, 28'), preferably attached to one or more side wall(s) of the housing (4).
